# EUROPÄISCHE PATENTSCHRIFT

(11) **EP 2 124 307 B1**
(45) Veröffentlichungstag und Bekanntmachung des Hinweises auf die Patenterteilung: **17.09.2014**
(21) Anmeldenummer: 09002905.9
(22) Anmeldetag: 28.02.2009
(51) Int. Cl.: H02G 3/12

(54) **Elektrisches Installationsgerät**
Electric installation device
Appareil d'installation électrique

(30) Priorität: 16.05.2008 DE 102008023986
(43) Veröffentlichungstag der Anmeldung: 25.11.2009
(73) Patentinhaber: Berker GmbH & Co. KG, 58579 Schalksmühle (DE)
(72) Erfinder: Kirk, Anne, Dipl.-Ing., Dipl.-Wirt.-Ing., 58579 Schalksmühle (DE); Göhl, Dieter, Dipl.-Ing., 58507 Lüdenscheid (DE); Bröcher, Egon, 57482 Wenden (DE); Wurm, Wolfgang, 57482 Wenden (DE); Eich, Wolfgang, 57482 Wenden (DE)

(56) Entgegenhaltungen:
- EP-A1- 0 915 537
- EP-A2- 0 240 916
- DE-A1- 10 213 849
- DE-U1- 20 013 233
- DE-U1- 29 901 709

## Beschreibung

Die vorliegende Erfindung geht von einem gemäß Oberbegriff des Hauptanspruches konzipierten elektrischen Installationsgerät für die Gebäudesystemtechnik aus.

Derartige elektrische Installationsgeräte sind in der Regel dafür vorgesehen, in sogenannte Installationsdosen montiert zu werden. Damit auf einfache Art und Weise eine zuverlässige Befestigung der elektrischen Installationsgeräte gewährleistet ist, sind diese mit sogenannten Spreizkrallen ausgerüstet, welche über Spreizschrauben betrieben werden. Über die Spreizschrauben können die Spreizkrallen je nach Bedarf in eine zurückgezogene "Parkposition" und eine ausgefahrene "Festlegungsposition" verstellt werden.

Durch die EP 0 915 537 A1 ist ein dem Oberbegriff des Hauptanspruches entsprechendes elektrisches Installationsgerät bekannt geworden. Dieses elektrische Installationsgerät weist ein aus Kunststoff bestehendes, zur Aufnahme von Funktionselementen vorgesehenes Gehäuse auf, an welchem ein Träger und jeweils zwei Befestigungseinrichtungen festgelegt sind. Jede Befestigungseinrichtung weist eine Spreizkralle und eine Spreizschraube auf. Zur Festlegung des Trägers am Gehäuse weisen der Träger und das Deckelteil des Gehäuses miteinander in Wirkverbindung kommende Befestigungsmittel auf. Die zur Lagerung der Spreizkralle notwenige Lageranordnung ist einstückig an das Sockelteil angeformt. Somit ist eine einfache Festlegung des Trägerteils am Deckelteil gewährleistet.

Durch die DE 198 12 556 B4 ist ein weiteres elektrisches Installationsgerät bekannt geworden. Dieses elektrische Installationsgerät weist ein aus Kunststoff bestehendes, zur Aufnahme von Funktionselementen vorgesehenes Gehäuse auf, an welchem ein Träger und jeweils zwei Befestigungseinrichtungen festgelegt sind. Jede Befestigungseinrichtung weist eine im Wesentlichen L-förmig ausgebildete Spreizkralle und eine Spreizschraube auf. Zur Lagerung der Spreizkralle ist dabei eine aus Metall hergestellte separate Lageranordnung vorgesehen. Eine solche Lageranordnung erfordert jedoch einen bestimmten fertigungstechnischen Aufwand. Durch dermaßen ausgebildete Befestigungseinrichtungen sind bereits hohe Auszugskräfte für das elektrische Installationsgerät realisiert.

Des Weiteren ist durch die EP 0 240 916 A2 eine Doppelsteckdose bekannt geworden, welche ein Gehäuse aufweist, dessen Unterteil beispielsweise aus thermoplastischem Kunststoff und dessen Oberteil vorzugsweise aus duroplastischem Material besteht.

Außerdem ist es durch die DE 102 13 849 A1 bei einem elektrischen Installationsgerät bekannt, zur Verbindung des Tragrahmens mit dem Gerätesockel an diesen vorhandene, miteinander in Wirkverbindung kommende, Befestigungs- bzw. Haltemittel vorzusehen. Alle Befestigungs- bzw. Haltemittel des Tragrahmens sind nicht elastisch und korrespondieren jeweils mit einem ebenfalls starren Anlageelement am Gerätesockel.

Zudem ist es durch die DE 299 01 709 U1 bei einem elektrischen Installationsgerät bekannt, an die Spreizkrallen ein für das Zusammenwirken mit einem zusätzlichen Federelement bzw. einer zusätzlichen Spreizfeder vorgesehenen Noppen anzuformen.

Des Weiteren ist es durch die DE 200 13 233 U1 bekannt, bei einem elektrischen Installationsgerät eine Aufnahmeausbuchtung im Gehäuse für die Aufnahme einer Spreizkralle vorzusehen.

Ausgehend von einem derart ausgebildeten elektrischen Installationsgerät liegt der vorliegenden Erfindung die Aufgabe zugrunde, ein elektrisches Installationsgerät zu schaffen, welches bei besonders einfacher Realisierung einer galvanischen Trennung des Trägers von den Befestigungseinrichtungen bzw. Spreizkrallen eine für die Lagerung der Spreizkrallen notwendige Lageranordnung aufweist, die noch weiter vereinfacht ist und zudem eine besonders einfache Montage der Spreizkrallen und zugehörigen Spreizschrauben ermöglicht und bei dem zudem der Träger auf einfache Art und Weise besonders sicher am Deckelteil festgelegt ist. Erfindungsgemäß wird diese Aufgabe durch die im Hauptanspruch angegebenen Merkmale gelöst.

Bei einer solchen Ausbildung ist besonders vorteilhaft, dass durch die galvanische Trennung Spannungsverschleppungen im Fehlerfall auf den Träger wirkungsvoll vermieden sind. Zudem ist vorteilhaft, dass jede Spreizkralle zur Erzeugung von besonders hohen Auszugskräften bei vergleichsweise einfacher Herstellung sehr stabil ausgeführt ist und sich bei entsprechender Ausbildung des Gehäuses auf einfache Art und Weise in eine versteckt angeordnete "Parkposition" bringen lässt, in welcher die Spreizkralle nicht über die Außenkontur des Gehäuses hervorsteht. Eine solche Ausbildung hat den Vorteil, dass zum einen für den Benutzer bzw. Installateur das Verletzungsrisiko bedingt durch die in ihrer "Parkposition" nicht hervorstehende Befestigungskrallen beim Hantieren vermieden ist und dass es zum anderen beim Einführen des elektrischen Installationsgerätes in die Installationsdose nicht zu Beschädigungen z. B. von elektrischen Leitern durch die Spreizkrallen kommen kann.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:
- Fig. 1:: prinziphaft ein solches elektrisches Installationsgerät räumlich in Explosionsdarstellung;
- Fig. 2:: prinziphaft einen Zusammenbau eines solchen elektrischen Installationsgerätes in der Draufsicht;
- Fig. 3:: prinziphaft einen Zusammenbau eines solchen elektrischen Installationsgerätes in der Seitenansicht;
- Fig. 4:: prinziphaft eine Spreizkralle als Detail;
- Fig. 5:: prinziphaft die Befestigungsmittel des Gehäuses und des Trägers als Detail.

Wie aus den Figuren hervorgeht, besteht ein solches elektrisches Installationsgerät im Wesentlichen aus einem aus Kunststoff bestehenden, zur Aufnahme von Funktionselementen vorgesehenen Gehäuse, an welchem ein Träger 1 und zwei jeweils eine Spreizkralle 2 und eine Spreizschraube 3 aufweisende Befestigungseinrichtungen festgelegt sind. Das Gehäuse weist zur Aufnahme jeder der beiden Befestigungseinrichtungen eine Tasche 4 auf. Das Gehäuse besteht aus einem aus Duroplast gefertigten Sockelteil 5 und einem aus Thermoplast gefertigten Deckelteil 6. An das Sockelteil 5 sind zwei für das direkte Zusammenwirken mit den beiden Spreizkrallen 2 vorgesehene Lageranordnungen 7 angeformt. Weil die beiden Lageranordnungen 7 aus Duroplast bestehen und blockartig ausgeführt sind, ist eine hohe Formstabilität über eine lange Betriebsdauer sichergestellt.

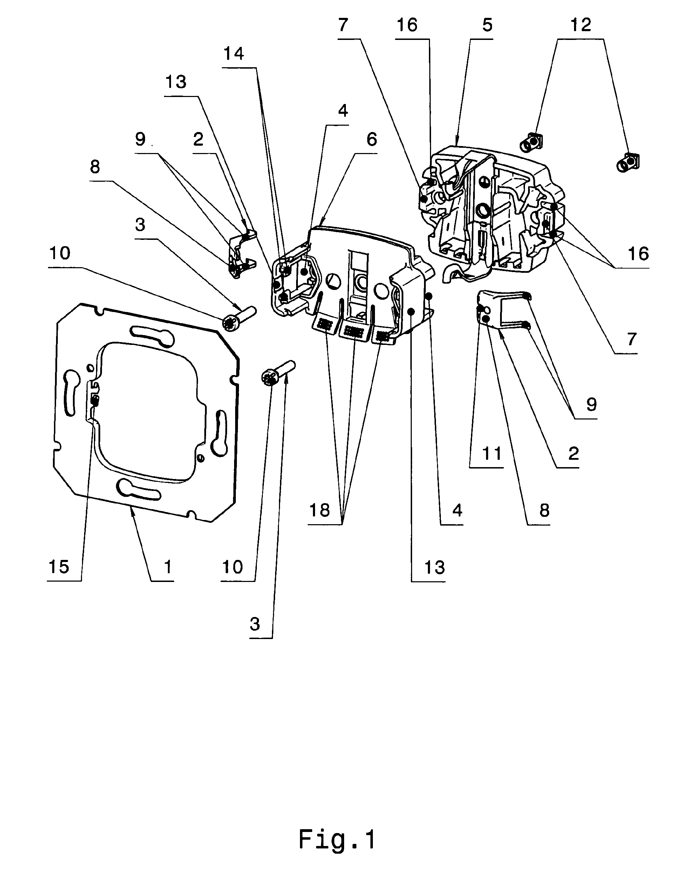

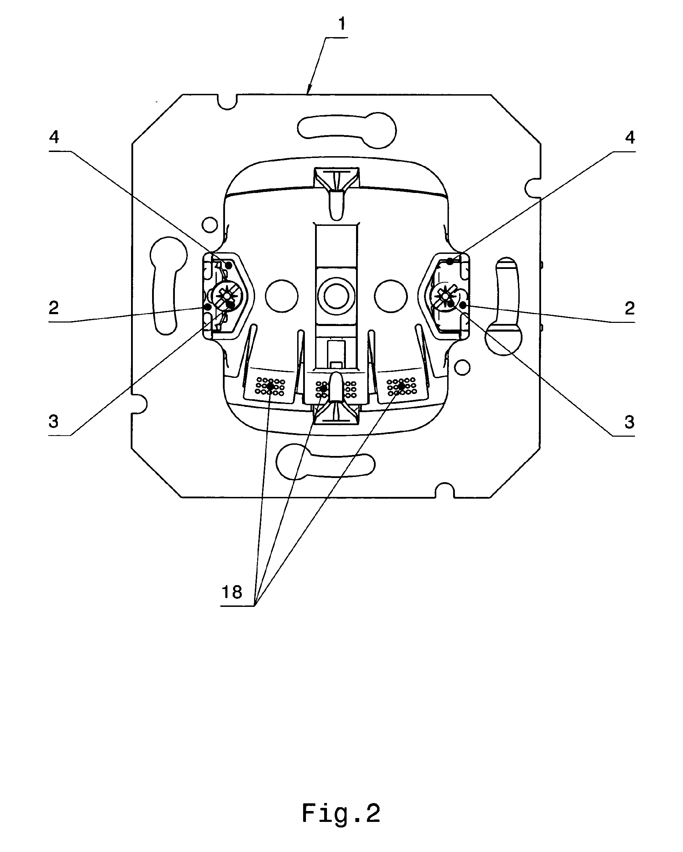

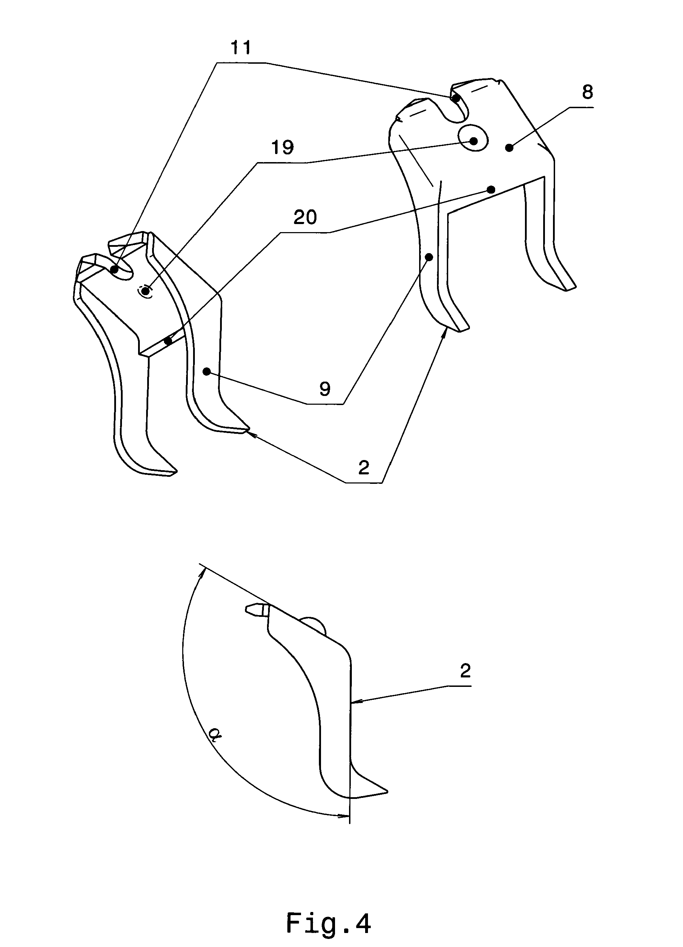

Wie des weiteren insbesondere aus Figur 1, Figur 2 und Figur 4 hervorgeht, weisen die beiden Spreizkrallen 2 jeweils eine im Wesentlichen U-förmige Kontur auf, wobei an die flächig ausgeführte Basis 8 zwei sich von dieser wegerstreckende Krallenarme 9 angeformt sind. Die flächig ausgebildete Basis 8 einer jeden Spreizkralle 2 wirkt einerseits mit dem Kopf 10 der zugeordneten Spreizschraube 3 zusammen und kommt andererseits jeweils direkt an der an das Gehäuse angeformten Lageranordnung 7 zur Anlage. Die beiden Krallenarme 9 sind jeweils an zwei gegenüberliegende Seitenbereiche der flächig ausgeführten Basis 8 angeformt und rechtwinklig davon abgebogen, so dass die U-förmige Kontur entsteht. Gleichzeitig verlaufen die beiden Krallenarme 9 in Bezug auf die flächig ausgeführte Basis 8 unter einem Winkel α von ca. 120 Grad und erstrecken sich stirnseitig weg von dieser Basis 8. Zudem ist in der flächig ausgebildeten Basis 8 einer jeden Spreizkralle 2 ein Schlitz 11 zur Durchführung des Schaftes der Spreizschraube 3 vorhanden. Auf einfache Art und Weise sind somit besonders stabil ausgeführte Spreizkrallen 2 realisiert, welche mit einer besonders einfach herstellbaren stabilen Lageranordnung 7 zusammenwirken. Bedingt durch die vorstehend beschriebene Ausbildung der Spreizkrallen 2 und die blockartig gestaltete stabile Lageranordnung 7 lassen sich die Spreizkrallen 2 zudem besonders schnell und einfach in die zur Aufnahme vorgesehenen Taschen 4 montieren. Vorteilhafterweise entstehen dabei sehr gute kinematische Eigenschaften, so dass zum einen keine zusätzlichen Elemente, wie z. B. Federn für die Rückstellung der Spreizkrallen 2 benötigt werden und zum anderen ebenfalls ohne Zusatzelemente besonders hohe Auszugskräfte für das elektrische Installationsgerät bei einfacher Handhabung realisiert sind. Wie bereits vorstehend beschrieben, besteht jede der beiden Befestigungseinrichtungen lediglich aus der sich an der Lageranordnung 7 abstützenden Spreizkralle 2, der zugeordneten Spreizschraube 3 und gegebenenfalls aus einer in das Sockelteil 5 montierten einfach ausgeführten Schraubbuchse 12. Vorteilhafterweise ist die Lageranordnung 7, wie bereits beschrieben, einstückig an das Sockelteil 5 des Gehäuses angeformt. Zudem ist an die flächig ausgebildete Basis 8 einer jeden Spreizkralle 2 ein Haltekümpel 19 angeformt, um die Spreizkralle 2 gegen Herausrutschen aus ihrer Tasche 4 zu sichern. Der Haltekümpel 19 steht dazu in Wirkverbindung mit der zugeordneten Innenseite einer der beiden an das Decketeil 6 angeformten Haltewände 13. Damit die Spreizkrallen 2 besonders stabil ausgeführt sind, ist stirnseitig an die Spreizkralle 2 ein Verbindungssteg 20 angeformt, welcher zwischen den beiden Krallenarmen 9 angeordnet ist.

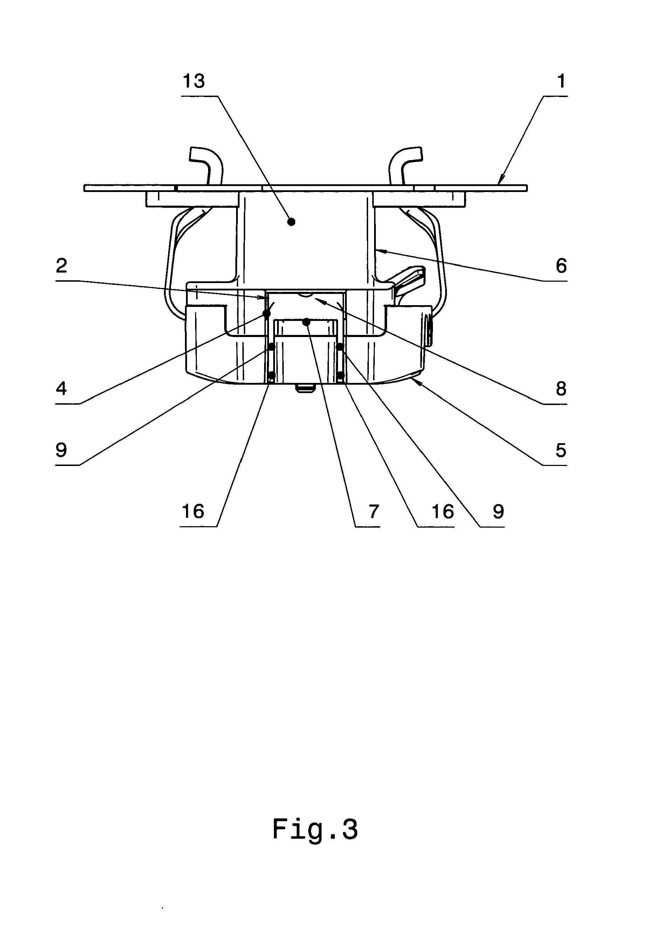

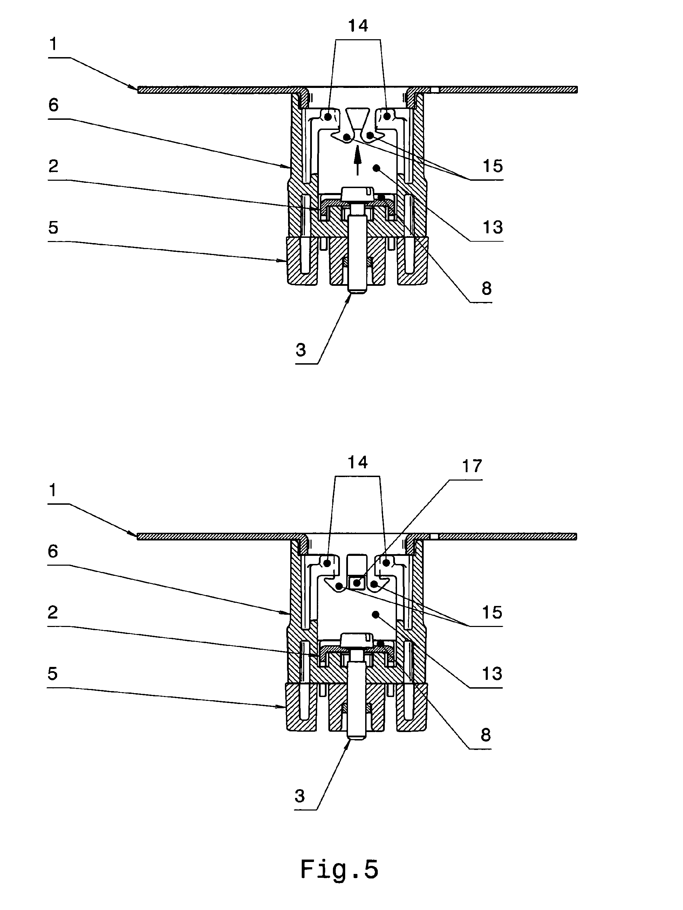

Wie des weiteren insbesondere aus Figur 1, Figur 3 und Figur 5 hervorgeht, sind an das Deckelteil 6 des Gehäuses zur Befestigung des Trägers 1 zwei Haltewände 13 angeformt. Zur Befestigung des Trägers 1 am Deckelteil 6 weist dieses als Rastnasen 14 ausgebildete Befestigungsmittel auf, welche mit als Rasthaken 15 ausgebildeten Befestigungsmitteln des Trägers 1 zusammenwirken. Die Rastnasen 14 sind einstückig an die Innenseite der beiden Haltewände 13 des Deckelteils 6 angeformt und die Rasthaken 15 sind einstückig an die Unterseite des Trägers 1 angeformt. Es sind vier Rastnasen 14 und vier Rasthaken 15 vorgesehen, welche paarweise miteinander in Wirkverbindung kommen. Auf einfache Art und Weise ist somit eine wirkungsvolle und sichere Befestigungsmöglichkeit für den Träger 1 geschaffen. Die Befestigung des Trägers 1 am Deckelteil 6 des Gehäuses erfolgt indem die als Rasthaken 15 ausgebildeten Befestigungsmittel des Trägers 1 während des Montageprozesses gespreizt werden, so dass diese hintergreifend an den als Rastnasen 14 ausgebildeten Befestigungsmitteln des Deckelteils 6 zur Anlage kommen. Damit die Rasthaken 15 des Trägers 1 nicht mehr zurückgestellt werden können, wird zudem während des Montageprozesses durch einen Formstempel ein Sicherungskümpel 17 aus jeder der beiden Haltewände 13 herausgedrückt, welcher zwischen den beiden Rasthaken 15 eines jeden der beiden Rasthakenpaare zu liegen kommt. Auf einfache Art und Weise ist somit der Träger 1 besonders sicher am Deckelteil 6 festgelegt. Figur 5 weist zwei Abbildungen auf, die den Montageprozess bzw. Befestigungsvorgang besonders augenfällig verdeutlichen. Außerdem sind die Lösetasten 18 für die -der Einfachheit halber nicht dargestellten- Klemmfedern der Kontakte einstückig an das Deckelteil 6 angeformt.

Damit die Spreizkrallen 2 in ihrer "Parkposition" nicht über die Kontur des Gehäuses hinausstehen, ist eine versteckte Aufnahme der Krallenarme 9 in entsprechend ausgebildeten Aufnahmeausnehmungen 16 des Gehäuses vorgesehen. Die Aufnahmeausnehmungen 16 sind unterhalb der Tasche 4 bzw. als Ergänzung der Tasche 4 in die Außenwandung des Sockelteils 5 eingeformt. Für jede Spreizkralle 2 sind zwei schlitzartige Aufnahmeausnehmungen 16 vorgesehen. Diese sind so tief ausgeführt, so dass die Krallenarme 9 in ihrer "Parkposition" gänzlich in die Aufnahmeausnehmungen 16 eintauchen. Somit ist sichergestellt, dass zum einen für den Benutzer bzw. Installateur das Verletzungsrisiko bedingt durch die in ihrer "Parkposition" nicht hervorstehende Befestigungskrallen vermieden ist und dass es zum anderen beim Einführen des elektrischen Installationsgerätes in die Installationsdose nicht zu Beschädigungen z. B. von elektrischen Leitern durch die Spreizkrallen 2 kommen kann. Erst wenn sich das elektrische Installationsgerät lagegerecht in der Installationsdose befindet, werden die Spreizkrallen 2 ausgehend von der "Parkposition" in ihre "Festlegungsposition" verstellt, indem die zugeordnete Spreizschraube 3 entsprechend verstellt wird.

Weiterhin ist bei einer solchen Ausführung vorteilhaft, dass auf einfache Art und Weise eine galvanische Trennung zwischen dem Träger 1 und den beiden Befestigungseinrichtungen bzw. Spreizkrallen 2 realisiert ist, weil der Träger 1 nur mit dem aus Thermoplast hergestellten Deckelteil 6 in Verbindung steht und ein entsprechender Isolierabstand von 3 mm zwischen dem Träger 1 und den Spreizkrallen 2 bzw. Spreizschrauben 3 eingehalten wird. Beim vorliegenden Ausführungsbeispiel ist der Träger 1 als sogenannter Tragring ausgeführt und das elektrische Installationsgerät stellt einen Funktionseinsatz für eine Schutzkontaktsteckdose dar. Der erfindungsgemäße Gedanke ist aber auch auf andere elektrische Installationsgeräte, wie z. B. Schalter, Dimmer, Kommunikationsapparate, Busapparate usw. ohne weiteres übertragbar. Auch kann der Träger 1 ohne weiteres als Tragplatte ausgeführt sein.

## Patentansprüche

1. Elektrisches Installationsgerät für die Gebäudesystemtechnik mit einem aus Kunststoff bestehenden, zur Aufnahme von Funktionselementen vorgesehenen Gehäuse, an welchem ein Träger (1) festgelegt ist und welches zur Halterung in einer Installationsdose mit zumindest einer, eine Spreizkralle (2) und eine Spreizschraube (3) aufweisenden Befestigungseinrichtung ausgerüstet ist, wobei zur Festlegung des Trägers (1) am Gehäuse der Träger (1) und das Deckelteil (6) des Gehäuses miteinander in Wirkverbindung kommende Befestigungsmittel (14, 15) aufweisen, und wobei die zur Lagerung der Spreizkralle (2) notwenige Lageranordnung (7) einstückig an das Sockelteil (5) angeformt ist, **dadurch gekennzeichnet, dass** das Gehäuse aus einem aus Duroplast hergestellten Sockelteil (5) und einem aus Thermoplast hergestellten Deckelteil (6) besteht, und dass zumindest ein am Deckelteil (6) vorhandenes Befestigungsmittel als angeformte Rastnase (14) und zumindest ein am Träger (1) vorhandenes Befestigungsmittel als an die Unterseite angeformter Rasthaken (15) ausgeführt ist, und dass an zumindest eine an das Deckelteil (6) angeformte Haltewand (13) zumindest ein, den Befestigungsmitteln (14, 15) zugeordneter Sicherungskümpel (17) angeformt ist.

2. Elektrisches Installationsgerät nach Anspruch 1, **dadurch gekennzeichnet, dass** an das Deckelteil (6) des Gehäuses zwei Haltewände (13) angeformt sind, und dass mehrere Rastnasen (14) an deren Innenseite vorhanden sind.

3. Elektrisches Installationsgerät nach einem der Ansprüche 1 oder 2, **dadurch gekennzeichnet, dass** die Spreizkralle (2) eine flächig ausgeführte Basis (8) aufweist, an die zwei sich von dieser wegerstreckende Krallenarme (9) derart angeformt sind, so dass die Spreizkralle (2) eine U-förmige Kontur aufweist, und dass die flächig ausgebildete Basis (8) einerseits direkt mit dem Kopf (10) der Spreizschraube (3) zusammenwirkt und andererseits direkt an eine an das Gehäuse angeformte Lageranordnung (7) zur Anlage kommt.

4. Elektrisches Installationsgerät einem der Ansprüche 1 bis 3, **dadurch gekennzeichnet, dass** in der Spreizkralle (2) ein die Durchführung des Schaftes der Spreizschraube (3) ermöglichender Schlitz (11) vorhanden ist.

5. Elektrisches Installationsgerät nach einem der Ansprüche 1 bis 4, **dadurch gekennzeichnet, dass** die Krallenarme (9) der Spreizkralle (2) an zwei gegenüberliegende Seitenbereiche der flächig ausgeführten Basis (8) angeformt sind und sich von dieser wegerstreckend angeordnet sind.

6. Elektrisches Installationsgerät nach einem der Ansprüche 1 bis 5, **dadurch gekennzeichnet, dass** zwischen den beiden Krallenarmen (9) stirnseitig an die Spreizkralle (2) ein Versteifungssteg (20) angeformt ist.

7. Elektrisches Installationsgerät nach einem der Ansprüche 1 bis 6, **dadurch gekennzeichnet, dass** die flächig ausgeführte Basis (8) der Spreizkralle (2) mit einem Haltekümpel (19) versehen ist.

8. Elektrisches Installationsgerät nach einem der Ansprüche 1 bis 7, **dadurch gekennzeichnet, dass** in das Gehäuse zur versteckten Aufnahme der Spreizkralle (2) entsprechend ausgebildete Aufnahmeausnehmungen (16) eingeformt sind.

## Claims

1. An electrical installation device for building system technology with a housing consisting of plastics material and provided to receive functional elements, on which housing a carrier (1) is fixed and which is equipped with at least one fastening mechanism having a spreading claw (2) and a spreading screw (3) for retention in an installation socket, wherein to fix the carrier (1) on the housing, the carrier (1) and the lid part (6) of the housing have fastening means (14, 15) that enter an operative connection with one another, and wherein the support arrangement (7) necessary to mount the spreading claw (2) is formed in one piece on the socket part (5), **characterised in that** the housing comprises a socket part (5) produced from a thermosetting plastic and a lid part (6) produced from a thermoplastic, and **in that** at least one fastening means present on the lid part (6) is configured as a formed-on latching lug (14) and at least one fastening means present on the carrier (1) is configured as a latching hook (15) formed on the lower side, and **in that** at least one securing flange (17) associated with the fastening means (14, 15) is formed on at least one holding wall (13) formed on the lid part (6).

2. An electrical installation device according to claim 1, **characterised in that** two holding walls (13) are formed on the lid part (6) of the housing and **in that** a plurality of latching lugs (14) are present on the inside thereof.

3. An electrical installation device according to either of claims 1 or 2, **characterised in that** the spreading claw (2) has a flat base (8), on which two claw arms (9) extending away therefrom are formed such that the spreading claw (2) has a U-shaped contour, and **in that** the flat base (8), on the one hand, cooperates directly with the head (10) of the spreading screw (3) and, on the other hand, comes to rest directly on a support arrangement (7) formed on the housing.

4. An electrical installation device according to any one of claims 1 to 3, **characterised in that** a slot (11) allowing the shaft of the spreading screw (3) to be guided through is present in the spreading claw (2).

5. An electrical installation device according to any one of claims 1 to 4, **characterised in that** the claw arms (9) of the spreading claw (2) are formed on two opposing side regions of the flat base (8) and are arranged extending away therefrom.

6. An electrical installation device according to any one of claims 1 to 5, **characterised in that** a reinforcement web (20) is formed between the two claw arms (9) on the spreading claw (2) on the end face.

7. An electrical installation device according to any one of claims 1 to 6, **characterised in that** the flat base (8) of the spreading claw (2) is provided with a holding flange (19).

8. An electrical installation device according to any one of claims 1 to 7, **characterised in that** correspondingly formed receiving recesses (16) are formed in the housing for the concealed receiving of the spreading claw (2).

## Revendications

1. Appareil d'installation électrique pour la gestion technique des bâtiments, avec un boîtier réalisé en matière plastique et destiné à recevoir des éléments fonctionnels, boîtier sur lequel est fixé un support (1) et qui est équipée, pour son maintien dans une boîte d'installation, d'au moins un système de fixation présentant une griffe à expansion (2) et une vis à expansion (3), sachant qu'afin de fixer le support (1) sur le boîtier, le support (1) et la partie de couvercle (6) du boîtier présentent des moyens de fixation (14, 15) qui viennent en liaison fonctionnelle mutuelle, et sachant que l'agencement de palier (7) nécessaire pour le montage de la griffe à expansion (2) est formé d'un seul tenant sur la partie de socle (5), **caractérisé en ce que** le boîtier est constitué d'une partie de socle (5) fabriquée en duroplaste et d'une partie de couvercle (6) fabriquée en thermoplastique, et **en ce qu'**au moins un moyen de fixation présent sur la partie de couvercle (6) est réalisé sous forme de bec d'encliquetage (14) formé sur ladite partie et au moins un moyen de fixation présent sur le support (1) est réalisé sous forme de crochet d'encliquetage (15) formé sur la face inférieure, et **en ce qu'**au moins une partie emboutie de blocage (17) associée aux moyens de fixation (14, 15) est formée sur au moins une paroi de maintien (13) formée sur la partie de couvercle (6).

2. Appareil d'installation électrique selon la revendication 1, **caractérisé en ce que** deux parois de maintien (13) sont formées sur la partie de couvercle (6) du boîtier, et **en ce que** plusieurs becs d'encliquetage (14) sont présents sur leur face intérieure.

3. Appareil d'installation électrique selon la revendication 1 ou 2, **caractérisé en ce que** la griffe à expansion (2) présente une base (8) réalisée plane, sur laquelle deux bras crochus (9) s'éloignant de cette base sont formés de telle sorte que la griffe à expansion (2) présente un contour en forme de U, et **en ce que** la base (8) réalisée plane, d'une part coopère directement avec la tête (10) de la vis à expansion (3), et d'autre part vient directement en application contre un agencement de palier (7) formé sur le boîtier.

4. Appareil d'installation électrique selon l'une des revendications 1 à 3, **caractérisé en ce qu'**une fente (11) permettant le passage de la tige de la vis à expansion (3) est présente dans la griffe à expansion (2).

5. Appareil d'installation électrique selon l'une des revendications 1 à 4, **caractérisé en ce que** les bras crochus (9) de la griffe à expansion (2) sont formés sur deux régions latérales opposées de la base (8) réalisée plane et sont disposés en s'éloignant de celle-ci.

6. Appareil d'installation électrique selon l'une des revendications 1 à 5, **caractérisé en ce qu'**une nervure de renforcement (20) est formée du côté frontal sur la griffe à expansion (2) entre les deux bras crochus (9).

7. Appareil d'installation électrique selon l'une des revendications 1 à 6, **caractérisé en ce que** la base (8) réalisée plane de la griffe à expansion (2) est pourvue d'une partie emboutie de maintien (19).

8. Appareil d'installation électrique selon l'une des revendications 1 à 7, **caractérisé en ce qu'**afin de recevoir de manière dissimulée la griffe à expansion (2), des évidements de réception (16) de forme correspondante sont formés dans le boîtier.
